# DEMANDE DE BREVET EUROPEEN

(11) **EP 3 480 389 A1**
(43) Date de publication de la demande: **08.05.2019**
(21) Numéro de dépôt: 18204211.9
(22) Date de dépôt: 02.11.2018
(51) Int. Cl.: E04D 15/00, A47L 11/38, A47L 11/40, B08B 3/02, B09B 3/00, E04G 23/02, E04D 15/02

(54) **DISPOSITIF ET PROCÉDÉ DE NETTOYAGE D'UNE TOITURE AMIANTÉE**

(30) Priorité: 06.11.2017 FR 1760378
(71) Demandeur: Spartacus System, 26750 Chatillon Saint Jean (FR)
(72) Inventeur: Agostinelli, Siegfried, 26750 Chatillon Saint Jean (FR)
(74) Mandataire: Le Goaller, Christophe

(57) **Abrégé**

Un objet de l'invention est un dispositif de nettoyage (1) d'une toiture (T), comportant une enceinte de confinement (11) délimitée par une plaque supérieure (10), destinée à être disposée parallèlement à la toiture, et quatre faces latérales (11a, 11b,11c, 11d), perpendiculaires à la face supérieure, et formant un cadre, la plaque supérieure (10) et les quatre faces latérales délimitant l'enceinte de confinement (11), l'enceinte de confinement comportant une ouverture (14), s'étendant face à la plaque supérieure, entre les quatre faces latérales, le dispositif comportant:
- un conduit d'admission d'eau (12);
- une buse de projection d'eau sous pression (16), située dans l'enceinte (11), reliée à l'admission d'eau et orientée de façon à projeter l'eau provenant du conduit d'admission vers l'ouverture de l'enceinte ;
- des roues (18), reliées au cadre et mobiles en rotation par rapport à ce dernier, permettant une translation du dispositif selon une direction de translation, de telle sorte que deux faces latérales (11a, 11b) sont orientées parallèlement à la direction de translation, et que deux faces latérales (11c, 11d) sont orientées perpendiculairement à la direction de translation ;
- une paroi de prolongement (21a, 21b), prolongeant chaque face latérale parallèle à la direction de translation ;
- une paroi de prolongement souple (21d), formée par une pluralité de segments souples s'étendant parallèlement les uns aux autres, prolongeant chaque face latérale perpendiculaire à la direction de translation.

## Description

### DOMAINE TECHNIQUE

Le domaine technique de l'invention est le traitement d'une toiture, de façon à nettoyer la toiture avant d'appliquer un revêtement permettant de confiner l'amiante.

### ART ANTERIEUR

La question de la maintenance de toitures amiantées concerne de nombreux bâtiments, généralement anciens. Ces toitures peuvent notamment être constituées de tôles ondulées constituées de fibrociment. Leur dégradation, du fait de leur vieillissement, s'accompagne d'un risque de dispersion de fibres d'amiante à l'intérieur des bâtiments ainsi que dans l'environnement de ces derniers. Aussi, lorsque des fissures apparaissent dans ces toitures, il est nécessaire de leur appliquer un confinement, par exemple sous la forme d'une peinture ou d'un enrobé, de façon à fixer l'amiante et éviter sa dispersion, tout en restaurant l'intégrité et l'étanchéité de la toiture.

Cependant, l'état des toitures impose qu'un nettoyage préliminaire soit réalisé, de façon à éliminer des résidus solides et labiles présents à la surface de toiture. L'objectif est que l'état de surface de la toiture soit compatible avec l'application d'une couche de confinement, de telle sorte que l'accroche de cette dernière sur la toiture soit optimale.

Le document GB2398481 décrit un procédé pour traiter une toiture contenant de l'amiante. Le procédé comporte tout d'abord une phase de nettoyage de la toiture, à l'aide d'un chariot se déplaçant le long de ladite toiture, et projetant de l'eau sous pression contre cette dernière. L'eau s'écoulant de la toiture est ensuite recueillie, avant d'être filtrée par un dispositif de filtration. L'eau s'écoulant de la toiture comporte en effet des fibres d'amiante, ainsi que des particules de mousse, de lichen ou de fibrociment. L'étape de filtration permet de concentrer et de collecter les fibres d'amiante, et autres particules, afin de pouvoir les conditionner et les adresser vers des exutoires dédiés. La filtration permet également de filtrer l'eau, de façon à rejeter une eau aussi propre que possible. Après la phase de nettoyage, un revêtement est appliqué sur la toiture, de façon à colmater les fissures et à confiner l'amiante résiduelle.

Les documents FR2471287 et EP0814217 décrivent également des dispositifs permettant un nettoyage de toitures amiantées à l'aide d'eau sous pression.

L'étape de nettoyage de la toiture est critique, car elle met en oeuvre de l'eau sous pression sur de l'amiante labile. La dispersion de l'eau sous pression et l'écoulement de l'eau sur la toiture doivent être contrôlés le mieux possible, de façon à limiter une contamination de l'environnement. L'inventeur a développé un dispositif de nettoyage d'une toiture amélioré, de façon à mieux maîtriser l'écoulement de l'eau sur la toiture. Cela permet d'effectuer un traitement préalable à l'application d'un revêtement étanche sur la toiture, assurant une étanchéité de cette dernière de façon pérenne, ainsi qu'un recouvrement de l'amiante.

### EXPOSE DE L'INVENTION

Un premier objet de l'invention est un dispositif de nettoyage d'une toiture, comportant une enceinte de confinement délimitée par une plaque supérieure, destinée à être disposée parallèlement à la toiture, et quatre faces latérales, perpendiculaires à la face supérieure, et formant un cadre, la plaque supérieure et les quatre faces latérales délimitant l'enceinte de confinement, l'enceinte de confinement comportant une ouverture, s'étendant face à la plaque supérieure, entre les quatre faces latérales, le dispositif comportant:
- un conduit d'admission d'eau ;
- une buse de projection d'eau sous pression, située dans l'enceinte, reliée au conduit admission d'eau et orientée de façon à projeter l'eau provenant du conduit d'admission vers l'ouverture de l'enceinte ;
- des roues, reliées au cadre et mobiles en rotation par rapport à ce dernier, permettant une translation du dispositif selon une direction de translation, de telle sorte que deux faces latérales sont orientées parallèlement à la direction de translation, et que deux faces latérales sont orientées perpendiculairement à la direction de translation ;
- une première paroi de prolongement, de préférence souple, prolongeant chaque face latérale parallèle à la direction de translation ;
- une deuxième paroi de prolongement, formée par une pluralité de segments souples, ou bandes souples, s'étendant parallèlement les uns aux autres, prolongeant chaque face latérale perpendiculaire à la direction de translation.

Selon un mode de réalisation, chaque roue est disposée autour d'un axe de rotation, solidaire du cadre. L'espacement entre deux roues voisines l'une de l'autre, sur un même axe de rotation, peut être ajustable.

Selon un mode de réalisation, la plaque supérieure s'étend selon un plan radial, les faces latérales s'étendant selon un axe transversal, perpendiculaire au plan radial.

Les faces latérales peuvent s'étendre, perpendiculairement au plan radial, selon une hauteur comprise entre 5 cm et 30 cm.

Les segments souples formant la deuxième paroi de prolongement, perpendiculaire à la direction de translation, peuvent présenter une largeur inférieure à 10 cm ou à 5 cm ou à 2 cm. La largeur s'entend perpendiculairement à la direction de translation, selon le plan radial.

Selon un mode de réalisation, les premières parois de prolongement prolongeant chaque face latérale parallèle à la direction de translation, présentent une longueur, selon la direction de translation, supérieure à 10 cm, ou supérieure à 20 cm ou supérieure à 30 cm.

La distance entre au moins une première paroi de prolongement, prolongeant chaque face latérale parallèle à la direction de translation, et la plaque supérieure, peut être ajustable.

La buse de projection d'eau peut être fixée à une platine, cette dernière étant mobile en rotation par rapport à la plaque supérieure, de telle sorte que sous l'effet de l'admission d'eau sous pression dans le conduit d'admission, la platine effectue un mouvement de rotation.

Un autre objet de l'invention est un procédé de nettoyage d'une toiture à l'aide d'un dispositif selon le premier objet de l'invention, le procédé comportant les étapes suivantes :
- application du dispositif sur la toiture, de telle sorte que l'ouverture soit orientée face à la toiture et que les roues reposent sur la toiture;
- connexion du conduit d'admission d'eau à une arrivée d'eau sous pression;
- translation du dispositif le long de la toiture.

Le procédé peut comporter une collecte de l'eau s'écoulant de la toiture, de façon à filtrer l'eau ainsi collectée.

Le dispositif de nettoyage peut être relié à un moyen d'accroche pour être retenu durant la translation.

Un autre objet de l'invention est un procédé de traitement d'une toiture fissurée et présentant de l'amiante, le procédé comportant les étapes suivantes :
a) nettoyage de la toiture en appliquant le procédé selon le deuxième objet de l'invention;
b) collecte de l'eau s'écoulant de la toiture et filtration de l'eau collectée ;
c) application d'un revêtement, par exemple un enduit ou une peinture, sur la toiture nettoyée, pour colmater les fissures et confiner l'amiante résiduelle présente dans la toiture.

L'étape c) peut comporter les sous-étapes suivantes :
ci) application d'une couche d'accroche sur la toiture ;
cii) application d'une peinture sur la couche d'accroche, après séchage de cette dernière.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

Les figures 1A et 1B sont des vues en trois dimensions d'un exemple de dispositif de nettoyage.
Les figures 2A, 2B et 2D schématisent les étapes d'un procédé de traitement d'une toiture selon l'invention. La figure 2C montre un détail du dispositif de nettoyage.

### EXPOSE DE MODES DE REALISATION PARTICULIERS

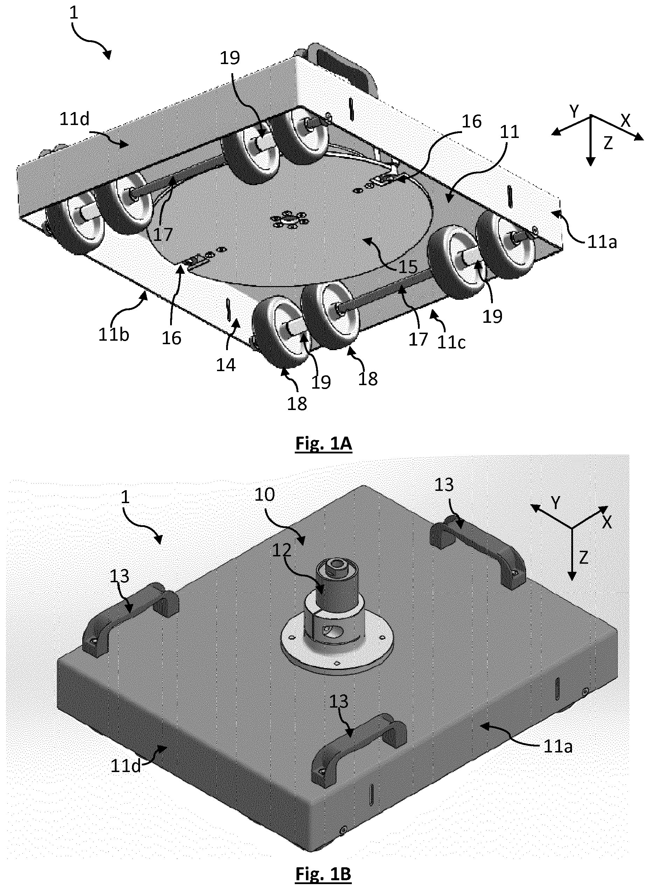

Les figures 1A et 1B représentent un schéma d'un dispositif de nettoyage 1 selon l'invention. Le dispositif comporte une plaque supérieure 10, par exemple métallique, s'étendant selon un plan radial XY. La plaque supérieure forme, avec quatre parois latérales 11a, 11b, 11c et 11d, une enceinte de confinement 11. Les parois latérales 11a, 11b, 11c et 11d s'étendent, à partir de la plaque supérieure 10, parallèlement un axe transversal Z.

La plaque supérieure 10 définit un quadrilatère, de type carré ou rectangle, dont les côtés ont une longueur, dans le plan radial XY, de préférence comprise entre 50 cm et 1 m. Les parois latérales 11a à 11d sont de préférence métalliques. Leur hauteur, selon l'axe transversal Z, est de préférence comprise entre 5 cm et 30 cm, et encore de préférence entre 5 cm et 20 cm.

L'enceinte de confinement 11 est ainsi délimitée par la plaque supérieure 10 ainsi que par les quatre parois latérales 11a, 11b, 11c et 11d. Les quatre parois latérales définissent un cadre, et de préférence un cadre rigide. L'enceinte de confinement 11 présente une ouverture 14, s'étendant entre les parois latérales, face à la plaque supérieure 10. Lors de l'utilisation du dispositif pour nettoyer une toiture, l'enceinte est disposée de telle sorte que la plaque supérieure s'étende parallèlement au toit, tandis que l'ouverture 14 est dirigée vers le toit, en s'étendant entre ce dernier et la plaque supérieure 10.

De préférence, la plaque supérieure et les parois latérales sont pleines, ou essentiellement pleines, à quelques ouvertures fonctionnelles près. La plaque supérieure et les parois latérales sont de préférence rigides.

L'enceinte 11 est reliée à un conduit d'admission 12. Lors de l'utilisation du dispositif, le conduit d'admission est destiné à être raccordé à une arrivée d'eau sous pression, la pression pouvant être typiquement de 100 bars ou de 200 bars. De préférence, le conduit d'admission 12 est situé à l'extérieur de l'enceinte 11. Dans cet exemple, le conduit d'admission 12 fait saillie par rapport à la plaque supérieure 10, à l'extérieur de l'enceinte.

Le dispositif peut comporter un moyen de préhension 13. Dans l'exemple représenté sur les figures 1A et 1B, le moyen de préhension 13 est formé de poignées rapportées sur la plaque supérieure 10, à l'extérieur de l'enceinte 11.

La figure 1A permet de visualiser l'intérieur de l'enceinte 11, à travers l'ouverture 14. L'enceinte de confinement 11 comporte une platine 15, sur laquelle sont fixées deux buses 16. Les buses sont raccordées au conduit d'admission 12. Elles sont orientées pour diriger l'eau sous pression, provenant du conduit d'admission 12, en direction de l'ouverture. La platine 15 est, dans cet exemple, mobile en rotation par rapport à la plaque supérieure 10. Cela est schématisé par la flèche tournante. Sous l'effet de l'arrivée d'eau sous pression, et de sa projection par les buses 16, sur une surface s'étendant face à l'ouverture 14, la platine 15 suit un mouvement de rotation parallèlement à la plaque supérieure 10. Cela augmente l'efficacité du nettoyage.

Le nombre de buses 16 positionnées sur la platine 15 est de préférence compris entre 1 et 4. L'application d'un jet d'eau sous pression, combiné à une rotation de la platine 15, permet un nettoyage optimal d'une surface disposée face à l'ouverture 14, la surface nettoyée étant généralement une partie d'une toiture. Les buses sont de préférence inclinées, par rapport à l'axe transversal Z, de façon à favoriser la mise en rotation de la platine 15 sous l'effet de la projection d'eau.

Dans l'exemple représenté, le conduit d'admission 12 comporte un joint tournant, qui autorise une rotation des buses, relativement à la plaque supérieure 10, tout en préservant l'étanchéité de la connexion entre le conduit d'admission 12 et l'arrivée d'eau sous pression.

Le dispositif 1 est mobile en translation selon une direction de translation X. Dans l'exemple représenté, des axes de rotation 17 sont ménagés à travers l'enceinte 11. Les axes de rotation s'étendent entre deux parois latérales 11a et 11b opposées, ces parois latérales étant orientées parallèlement à la direction de translation. Chaque axe de rotation 17 supporte des roues 18, mobiles en rotation par rapport à ce dernier. Dans l'exemple représenté, le dispositif 1 comporte deux axes de rotation disposés parallèlement l'un à l'autre. Chaque axe de rotation 17 porte quatre roues.

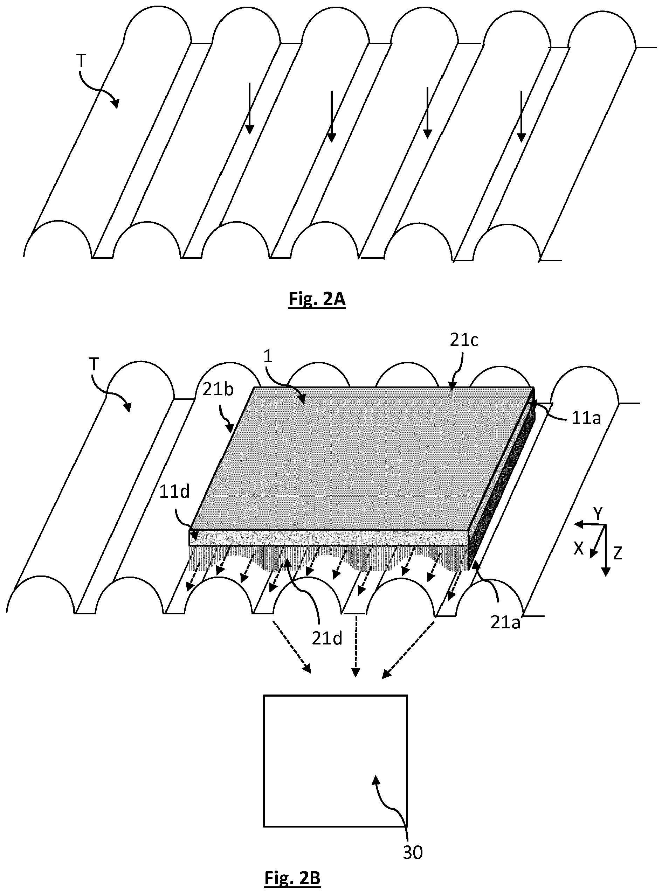

Avantageusement, lorsque la toiture à traiter comporte des ondulations parallèles les unes aux autres, chaque roue est destinée à être disposée dans un creux d'ondulation. Sur la figure 2A, on a représenté une toiture T présentant de telles ondulations. Les flèches verticales correspondent aux positions respectives des quatre roues 18 d'un même axe 17. Le dispositif peut alors être déplacé sur la toiture, en étant guidé dans les creux définis par les ondulations. Avantageusement, l'écartement entre deux roues voisines est ajustable. Pour cela, chaque roue peut être éloignée l'une de l'autre par un manchon tubulaire 19, s'étendant autour de l'axe de rotation 17, entre deux roues voisines. Le manchon permet de déterminer un écartement minimal entre les roues. On peut ainsi disposer de manchons tubulaires 19 de différentes longueurs. Les manchons peuvent être fixés et retirés de l'axe de rotation 17 par un moyen de fixation réversible, par exemple des goupilles. Tout autre moyen permettant d'ajuster l'écartement entre deux roues voisines peut être utilisé sans sortie du cadre de l'invention. Un tel ajustement permet de s'adapter à différentes formes d'ondulations, plus ou moins larges.

Selon un mode de réalisation, la distance de chaque axe de rotation 17 par rapport à la plaque supérieure 10, peut être également ajustée. Cela permet une adaptation du dispositif à des ondulations de différentes amplitudes, c'est-à-dire de différentes hauteurs perpendiculairement à la surface décrite par la toiture T.

La principale fonction de l'enceinte 11 est le confinement de l'eau sous pression projetée par les buses 16 contre une toiture. En effet, lorsque la toiture est amiantée, l'eau peut entraîner de l'amiante, et cela d'autant plus que l'état de surface de la toiture est dégradé. La plaque supérieure 10 et les parois latérales 11 permettent d'éviter des projections d'eau provenant de la toiture T. Afin de maîtriser l'écoulement de l'eau, le long de la toiture traitée, chaque paroi latérale est prolongée par une paroi, dite paroi de prolongement. De préférence, chaque paroi de prolongement est souple. Il peut par exemple s'agir d'une paroi synthétique ou à base de caoutchouc.

Compte tenu des géométries particulières des toitures, présentant fréquemment des ondulations, les parois de prolongement sont différentes, selon qu'elles sont solidaires d'une paroi latérale s'étendant parallèlement à la direction de translation X, ou perpendiculairement à cette dernière. On distingue ainsi des parois, dites premières parois de prolongement, prolongeant les parois latérales 11a, 11b s'étendant parallèlement à la direction de translation X, ainsi que des parois, dites deuxièmes parois de prolongement, prolongeant les parois latérales 11c, 11d s'étendant perpendiculairement à la direction de translation X. La hauteur des parois de prolongement, selon l'axe Z, est de préférence comprise entre 5 cm et 20 cm, voire 30 cm.

Lorsque la paroi latérale s'étend parallèlement à la direction de translation X, comme par exemple les parois 11a et 11b représentées sur les figures 1A, 1B ou la paroi 11a schématisée sur la figure 2B, la première paroi de prolongement 21a, 21b qui lui est associée est pleine et présente une longueur, selon la direction de translation, de préférence supérieure à 10 cm, voire supérieure à 20 cm ou à 30 cm. Une telle paroi de prolongement forme une jupe, destinée à prévenir un écoulement d'eau à l'extérieur du périmètre défini par la paroi latérale qui lui est associée. Elle est de préférence souple. La distance séparant une ou chaque première paroi de prolongement de la plaque supérieure 11 peut être ajustable. Sur la figure 2B, la paroi de prolongement 21b est masquée par le dispositif. Elle est similaire à la paroi de prolongement 21a.

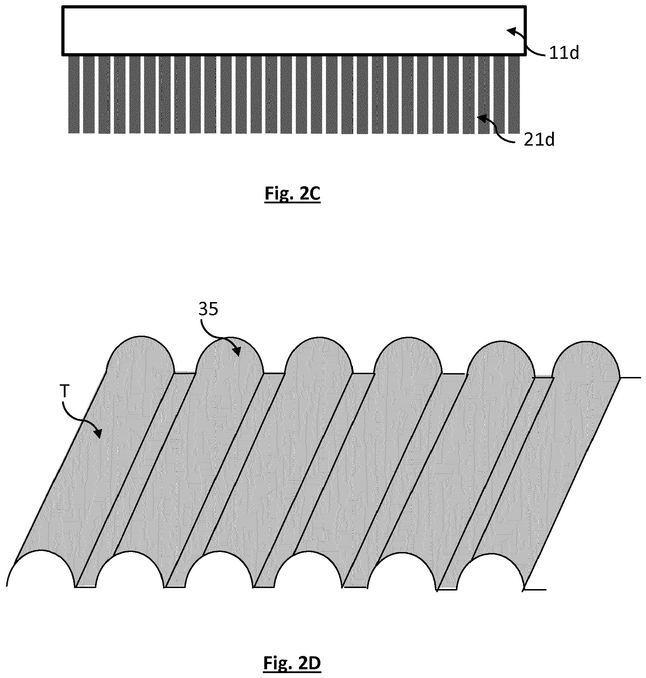

Lorsque la paroi latérale s'étend perpendiculairement à la direction de translation X, comme par exemple les parois 11c et 11d représentées sur les figures 1A, 1B ou la paroi 11d schématisée sur la figure 2B, la deuxième paroi de prolongement 21c, 21d qui lui est associée est formée de segments souples adjacents les uns des autres, dont la largeur, perpendiculairement à la direction de translation, est de préférence inférieure à 5 cm, voire inférieure à 2 cm ou inférieure à 1 cm. Leur hauteur, selon l'axe Z, est de préférence comprise entre 5 cm et 30 cm. Il peuvent être réalisés selon une matière plastique souple, ou selon un polymère souple. Ainsi, la deuxième paroi de prolongement prend la forme d'une brosse souple, pouvant se déformer sur la toiture. Ces segments forment des bandes souples, qui se déplient dans les creux des ondulations et se courbent sur des crêtes définies par les ondulations. Cela permet une meilleure conformation de la paroi de prolongement aux creux et aux crêtes formées par les ondulations, comme représenté sur la figure 2B. Une telle paroi de prolongement s'adapte à la géométrie de la toiture, ce qui permet de limiter le risque de projection d'eau rebondissant de la toiture. Une telle paroi de prolongement autorise également un écoulement d'eau le long de la toiture T, comme représenté par les flèches en pointillés sur la figure 2B. L'écoulement s'effectue en particulier entre deux segments adjacents. Durant la translation le long de la toiture, le dispositif peut être retenu, en étant par exemple accroché à une corde, de façon à être progressivement descendu puis remonté le long de la toiture. Sur la figure 2B, la paroi de prolongement 21c est masquée par le dispositif. Elle est similaire à la paroi de prolongement 21d. La figure 2C schématise la paroi de prolongement 21d.

Ainsi, la combinaison de premières parois de prolongements pleines et relativement longues, parallèlement à la direction de translation, avec au moins une deuxième paroi de prolongement segmentée, s'étendant perpendiculairement à la direction de translation, permet de minimiser le risque de projection d'eau à l'extérieur de l'enceinte 11, tout en autorisant un ruissellement de l'eau, susceptible de contenir de l'amiante, le long de la toiture nettoyée.

L'eau ruisselante peut être collectée par une gouttière, puis être filtrée par un dispositif mobile de fitration 30, comportant différents filtres, de différentes granulométries, de façon à retenir les particules solides présentes dans l'eau, et en particulier les fibres d'amiante. Un tel filtre peut par exemple comporter une association de filtres disposés en série, dont les granulométries respectives sont de 50 µm, 25 µm et 5 µm. Le terme granulométrie désigne une taille minimale d'une particule retenue par le filtre. Le dispositif de filtration est schématisé sur la figure 2C. Suite au nettoyage de la toiture, un revêtement 35 peut être appliqué sur la toiture, de façon à colmater les fissures et former une matrice de confinement de l'amiante, comme représenté sur la figure 2D. L'inventeur a estimé qu'il est préférable d'effectuer une telle application en deux étapes : une première étape permet de former une couche d'accroche, tandis qu'une deuxième étape correspond à l'application d'une peinture, après séchage de la couche d'accroche. Les revêtements peuvent être appliqués au rouleau, à la brosse ou encore en étant projeté par un pistolet dit "airless".

L'invention pourra s'appliquer au traitement de toitures, en particulier des toitures amiantées, en particulier lors d'interventions menées à l'air libre, l'amiante étant entraînée par de l'eau.

## Revendications

1. Dispositif de nettoyage (1) d'une toiture (T), comportant une enceinte de confinement (11) délimitée par une plaque supérieure (10), destinée à être disposée parallèlement à la toiture, et quatre faces latérales (11a, 11b,11c, 11d), perpendiculaires à la face supérieure, et formant un cadre, la plaque supérieure (10) et les quatre faces latérales délimitant l'enceinte de confinement (11), l'enceinte de confinement comportant une ouverture (14), s'étendant face à la plaque supérieure, entre les quatre faces latérales, le dispositif comportant:
- un conduit d'admission d'eau (12);
- une buse de projection d'eau sous pression (16), située dans l'enceinte (11), reliée au conduit d'admission d'eau (12) et orientée de façon à projeter l'eau provenant du conduit d'admission vers l'ouverture de l'enceinte ;
- des roues (18), reliées au cadre et mobiles en rotation par rapport à ce dernier, permettant une translation du dispositif selon une direction de translation, de telle sorte que deux faces latérales (11a, 11b) sont orientées parallèlement à la direction de translation, et que deux faces latérales (11c, 11d) sont orientées perpendiculairement à la direction de translation ;
- une première paroi de prolongement (21a, 21b), prolongeant chaque face latérale (11a, 11b) parallèle à la direction de translation ;
- une deuxième paroi de prolongement (21c, 21d), formée par une pluralité de segments souples s'étendant parallèlement les uns aux autres, prolongeant au moins une face latérale (11d) perpendiculaire à la direction de translation.

2. Dispositif selon la revendication 1, dans lequel chaque roue est disposée autour d'un axe de rotation (17), solidaire du cadre, et dans lequel l'espacement entre deux roues voisines l'une de l'autre, sur un même axe de rotation, est ajustable.

3. Dispositif selon la revendication 1 ou la revendication 2, dans lequel la plaque supérieure (10) s'étend selon un plan radial (XY), les faces latérales s'étendant selon un axe transversal (Z), perpendiculaire au plan radial.

4. Dispositif selon la revendication 3, dans lequel les faces latérales s'étendent, perpendiculairement au plan radial, selon une hauteur comprise entre 5 cm et 30 cm.

5. Dispositif selon l'une quelconque des revendications précédentes, dans lequel les segments souples présentent une largeur, parallèlement au plan radial (XY), inférieure à 10 cm ou à 5 cm ou à 2 cm.

6. Dispositif selon l'une quelconque des revendications précédentes, dans lequel une première paroi de prolongement (21a, 21b), prolongeant une face latérale parallèle à la direction de translation (11a, 11b), présente une longueur, selon la direction de translation, supérieure à 10 cm, ou supérieure à 20 cm ou supérieure à 30 cm, ladite première paroi de prolongement étant pleine selon ladite longueur, de façon à minimiser le risque de projection d'eau à l'extérieur de l'enceinte.

7. Dispositif selon l'une quelconque des revendications précédentes, dans lequel la distance entre chaque première paroi de prolongement (21a, 21b), prolongeant chaque face latérale parallèle à la direction de translation (11a, 11b), et la plaque supérieure (11), est ajustable.

8. Dispositif selon l'une quelconque des revendications précédentes, dans lequel la buse de projection d'eau (16) est fixée à une platine (15), cette dernière étant mobile en rotation par rapport à la plaque supérieure (10), de telle sorte que sous l'effet de l'admission d'eau sous pression dans le conduit d'admission, la platine effectue un mouvement de rotation.

9. Procédé de nettoyage d'une toiture (T) à l'aide d'un dispositif objet de l'une quelconque des revendications précédentes, le procédé comportant les étapes suivantes :
- application du dispositif (1) sur la toiture, de telle sorte que l'ouverture soit orientée face à la toiture et que les roues reposent sur la toiture ;
- connexion du conduit d'admission d'eau (12) à une arrivée d'eau sous pression;
- translation du dispositif le long de la toiture.

10. Procédé de traitement d'une toiture (T) fissurée et présentant de l'amiante, le procédé comportant les étapes suivantes :
a) nettoyage de la toiture en appliquant le procédé selon la revendication 9 ;
b) collecte de l'eau s'écoulant de la toiture et filtration de l'eau collectée ;
c) application d'un revêtement (35) sur la toiture nettoyée, pour colmater les fissures et confiner l'amiante résiduelle présente dans la toiture.

11. Procédé de traitement selon la revendication 10, dans lequel l'étape c) comporte les sous-étapes suivantes
ci) application d'une couche d'accroche sur la toiture ;
cii) application d'une peinture sur la couche d'accroche, après séchage de cette dernière.

12. Procédé de traitement selon la revendication 11, dans lequel les applications de couche d'accroche et/ou de peinture sont réalisées au rouleau ou à la brosse ou par un pistolet.
